# EUROPÄISCHE PATENTANMELDUNG

(11) **EP 1 217 784 A1**
(43) Veröffentlichungstag der Anmeldung: **26.06.2002**
(21) Anmeldenummer: 01130597.6
(22) Anmeldetag: 21.12.2001
(51) Int. Cl.: H04L 9/32

(54) **Verfahren und Vorrichtung zur Herstellung einer digitalen Signatur**

(30) Priorität: 23.04.2001 DE 10119934; 22.12.2000 DE 10064720
(71) Anmelder: timeproof Time Signature GmbH, 21079 Hamburg (DE)
(72) Erfinder: Kloog, Thorsten, Rostock, D-18055 (DE)
(74) Vertreter: Schupfner, Georg U.

(57) **Zusammenfassung**

Gegenstand der Erfindung ist ein Verfahren und eine Vorrichtung zur Herstellung einer Signatur, insbesondere einer Zeitsignatur.

## Beschreibung

Die Erfindung betrifft ein Verfahren und eine Vorrichtung zur Herstellung einer Signatur, insbesondere einer Zeitsignatur.

In vielen Fällen ist es notwendig, das Vorliegen eines bestimmten Dokumentes zu einer bestimmten Zeit nachzuweisen oder eine andere Information in beglaubigter Form nachzuweisen. Herkömmlich kann dies je nach Anforderung durch den Eingangsstempel, den Poststempel, Übersendung per Einschreiben oder notarielle Beglaubigung geschehen. Solche Methoden lassen sich jedoch auf in elektronischer Form vorliegende Dokumente oder Daten nicht anwenden. Außerdem sind sie entweder leicht manipulierbar oder aufwendig.

Elektronische Dokumente werden deshalb elektronisch zeitsigniert. Bei dem elektronischen Zeitsignieren handelt es sich um ein Verfahren, um in digitaler Form vorliegende Dokumente oder Daten mit der gesetzlich gültigen Zeit zu verknüpfen und zu versiegeln. Liegen Dokument und Zeitsignatur vor, kann im nachhinein nachgewiesen werden, dass das Dokument zu einem bestimmten Zeitpunkt in exakt dieser Form existiert hat. Die Anmelderin liefert auf Anforderung Zeitstempel über eine Internetverbindung aus. Anforderer kann zum Beispiel der Sachbearbeiter einer Meldebehörde sein, der einen elektronischen Registereintrag ändert oder erstellt, aber auch der Konstrukteur, der eine CAD-Zeichnung qualitätsgeprüft ablegt, der Scan-Operator in einer Bank, der Vertragsurkunden in das Archiv übernimmt, ein Multimedia-Content-Server, der digitale Objekte, wie Musikstücke oder Filme, via Internet zur zeitbeschränkten Nutzung aushändigt oder das Softwaresystem eines Herstellers, das Bestellungen über Internet in das System des Lieferanten überträgt.

Generell wird ein digitales Dokument oder ein Vorgang immer dann zeitgestempelt, wenn die Aufzeichnung gemäß einer Dokumentationspflicht zu erfolgen hat oder wenn die Aufzeichnung aus eigenem Interesse zwecks Erzielung einer Nachweisfähigkeit erfolgt.

Technisch betrachtet ist eine digitale Zeitsignatur eine digitale Unterschrift zu einem Dokument, dem vorher die gesetzlich gültige aktuelle Zeit fälschungssicher hinzugefügt wurde. Zur Herstellung einer Zeitsignatur benötigt man abgesehen von erforderlichen Kommunikationskomponenten eine manipulationssichere Zeitquelle und eine weitere Einheit, die vorgelegte Daten zusammen mit der gültigen Zeit elektronisch und manipulationsgeschützt "unterschreibt".

Aus der DE 195 32 617 C2 ist ein Verfahren zur Versiegelung digitaler Daten bekannt, bei dem ein externes Zeitsignal empfangen und nach einer Überprüfung der Richtigkeit dieses Signals den zu stempelnden digitalen Daten hinzugefügt wird. Die zeitgestempelten digitalen Daten werden anschließend verschlüsselt.

Im folgenden soll ein bekanntes Verfahren zur Herstellung eines Zeitstempels erläutert werden:

Eine elektronische Datei, im folgenden Nutzdaten N_{D} genannt, soll zeitgestempelt werden. Damit die Nutzdaten nicht im Klartext über das Internet versendet werden müssen, wird bereits auf der Anfordererseite der HASH-Wert der Daten (N_{D}) gebildet. Bei der Zeitstempelinstitution wird den Nutzdaten die Zeit t zugefügt, so daß ein Datentupel [H (N_{D}), t] gebildet wird. Zur Signatur dieses Datentupels wird erneut der HASH-Wert H [H (N_{D}), t] gebildet und signiert. Dieser Wert wird an den Anforderer zusammen mit einer Information über die gestempelte Zeit zurückgesendet.

Dem Anforderer liegen die Nutzdaten vor, aus denen er eindeutig den HASH-Wert H (N_{D}) bestimmen kann. Weiter kennt er die Zeit t, zu der die Zeitstempelung vorgenommen worden ist, und die zeitgestempelte Datei H [H (N₀), t]. Zur Überprüfung des Zeitstempels muß erneut der HASH-Wert des Datentupels aus HASH-Wert der Nutzdaten und Zeit gebildet, signiert und mit dem signierten Wert Sig(H [H (N₀), t]) verglichen werden. Stimmen beide Dateien überein, ist die angegebene Zeitinformation richtig.

Die für die Erstellung der Zeitstempel verwendete Hardware besteht aus einem Computer zum Empfang der zu stempelnden Daten und zum Ablauf einer Protokollsoftware, einem Empfänger für ein Zeitsignal sowie einer standardisierten Spezial-Hardware, die die vorgelegten Daten zusammen mit der gültigen Zeit elektronisch und manipulationsgeschützt "unterschreibt". In der aktuellen Systemarchitektur wird hierfür eine Smartcard verwendet.

Der Zeitstempel ist dabei so sicher wie die Sicherheit der zugeführten Zeitinformation. Es gibt verschiedene Vorschläge zur Überprüfung der zugeführten Zeitinformation auf Plausibilität, z.B. aus der oben bereits genannten DE 195 32 617 C2, gemäß der das empfangene Zeitsignal mit einer internen Uhr verglichen wird. Für eine solche Plausibilitätsprüfung muss aber das gesamte Zeitstempelsystem manipulationsfrei sein. Das ist erreichbar mit strikten Zugangskontrollen zur Hardware. Während es unwahrscheinlich ist, dass eine vollständige Zeitstempelvorrichtung unrechtmäßig verwendet wird, besteht bei der aktuellen Systemarchitektur jedoch eine gewisse Gefahr, dass eine Smartcard aus einer Zeitstempelvorrichtung entwendet und zusammen mit anderer Hardware verwendet wird. Dem Zeitstempel ist nicht anzusehen, mit welcher Hardware er erstellt worden ist. Somit unterliegt die Zeitinformation keiner Kontrolle und Manipulationen sind möglich.

Der Erfindung liegt die Aufgabe zugrunde, die Signiereinheit einer Beglaubigungsvorrichtung mit der Beglaubigungseinheit so zu verknüpfen, dass die alleinige Verwendung der einen oder der anderen Komponente mit nicht autorisierter Hardware unmöglich ist. Insbesondere soll die Erfindung auf Zeitstempelvorrichtungen anwendbar sein.

Erfindungsgemäß wird die Aufgabe gelöst durch ein Verfahren zur Erzeugung einer Signatur mit einer Beglaubigungsvorrichtung, die eine Beglaubigungseinheit und eine Signiereinheit umfasst, das dadurch gekennzeichnet ist, dass die Beglaubigungseinheit der zu signierenden Datei eine Beglaubigungsinformation und eine Authentifizierungsinformation anfügt und die ergänzte Datei von der Signiereinheit signiert wird.

Insbesondere kann es sich bei der Beglaubigungseinheit um eine Zeitstempeleinheit handeln, die der zu signierenden Datei eine Zeitinformation anfügt. Die Erfindung wird im folgenden anhand einer Beglaubigungsvorrichtung mit Zeitstempeleinheit näher erläutert. Es versteht sich aber von selbst, dass die Erfindung auf jegliche Beglaubigungsvorrichtung anwendbar ist, bei der eine zu signierende Datei um eine Information ergänzt wird.

Mit dem erfindungsgemäßen Verfahren ist es möglich, später nachzuvollziehen, ob der Zeitstempel von einer bestimmten Zeitstempeleinheit erstellt worden ist.

Durch das erfindungsgemäße Verfahren wird verhindert, dass Zeitstempeleinheit und Signiereinheit voneinander getrennt eingesetzt werden können. Eine Signiereinheit kann ein mobiler Datenträger mit intelligenter Logik sein, der in die Zeitstempeleinheit eingesteckt werden muss und dort die Signatur der ihr von der Zeitstempeleinheit übergebenen Daten vornimmt. Der mobile Datenträger mit intelligenter Logik ist zum Beispiel eine Smartcard.

Die Authentifizierungsinformation umfasst einen Authentifizierungscode a, der ein geheimer Wert ist, zu dem es einen eindeutigen öffentlichen Wert a' gibt, von dem von außen nicht auf a geschlossen werden kann. Authentifizierungscode kann vorzugsweise ein Message Authentication Code (MAC) oder eine digitale Signatur sein.

Weiter wird erfindungsgemäß eine Vorrichtung zur Erzeugung einer Signatur (Beglaubigungsvorrichtung) vorgeschlagen, die eine Beglaubigungseinheit und eine Signiereinheit umfasst. Die erfindungsgemäße Vorrichtung ist dadurch gekennzeichnet, dass die Beglaubigungseinheit eine Beglaubigungsinformation und eine Authentifizierungsinformation liefert.

Wiederum kann es sich vorzugsweise um eine Vorrichtung zur Erzeugung einer Zeitsignatur handeln, bei der die Beglaubigungsinformation eine Zeitinformation ist. Anhand dieses Beispiels wird die Erfindung nachfolgend erläutert, ohne dass diese Anwendung einschränkend zu verstehen sein soll.

Die erfindungsgemäße Vorrichtung setzt das erfindungsgemäße Verfahren derart um, dass die Zeitstempeleinheit (allgemein als Beglaubigungseinheit bezeichnet) neben der Zeitinformation eine weitere Information liefert, die der zu stempelnden Datei angefügt wird und zur Identifikation der Zeitstempeleinheit dient. Die Authentifizierungsinformation stellt ein Geheimnis der Zeitstempeleinheit dar und dient zum Nachweis, dass der Zeitstempel tatsächlich mit einer Zeitinformation dieser Zeitstempeleinheit erstellt worden ist.

Eine Zeitstempelung ist nur so vertrauenswürdig wie die Autorität, die die Zeitstempelung vorgenommen hat. Eine Zeitstempelvorrichtung ist im wesentlichen in zwei Bereiche unterteilbar, nämlich einmal in den Bereich, der die angelieferten Daten routinemäßig bearbeitet und um eine Zeitinformation ergänzt. In diesem Bereich müssen Manipulationen des Zeitsignals verhindert werden. Solchen Manipulationen kann durch technische Mittel begegnet werden. Der zweite Bereich der Beglaubigungsvorrichtung umfasst den Bereich der Signierung. Hier ist der Signierschlüssel erforderlichenfalls umzustellen, falls Verdacht besteht, dass der Schlüssel entschlüsselt worden ist. Von der Systemarchitektur her ist es deshalb günstig, diesen Bereich leicht austauschbar zu gestalten, etwa in Form eines mobilen Datenträgers mit intelligenter Logik etwa einer Smartcard oder einer PCI-Karte.

Damit ist es aber möglich, die Signiereinheit aus dem System zu entfernen und mit einer zweiten Beglaubigungsvorrichtung, die relativ leicht herzustellen ist, zu verwenden. Den Daten ist hinterher nicht zu entnehmen, in Kombination mit welcher Zeitstempeleinheit die Signiereinheit verwendet worden ist. Manipulationen in diesem Bereich sind nur durch strikte Zugangskontrollen zu verhindern. Es erscheint relativ unwahrscheinlich, dass Missbrauch mit einer Beglaubigungsvorrichtung getrieben wird, sofern dazu die komplette Hardware entwendet werden muss. Die Entwendung einer Signiereinheit in Form einer Smartcard liegt aber durchaus im Rahmen des Möglichen, auch wenn strenge Sicherheitsvorkehrungen angewendet werden.

Das erfindungsgemäße Verfahren sieht nun vor, dass die im wesentlichen ortsfeste Zeitstempeleinheit der zu signierenden Dateien neben einer Zeitinformation (allgemein als Beglaubigungsinformation bezeichnet) auch eine Authentifizierungsinformation anfügt, die spezifisch für die Zeitstempeleinheit ist. Anhand dieser Information, die geheim zu halten ist, kann später zu jedem Zeitpunkt nachgeprüft werden, ob die Signatur des mobilen Datenträgers mit intelligenter Logik ― etwa der Smartcard - in Zusammenhang mit einer Zeitstempelung dieser Zeitstempeleinheit geschehen ist oder nicht.

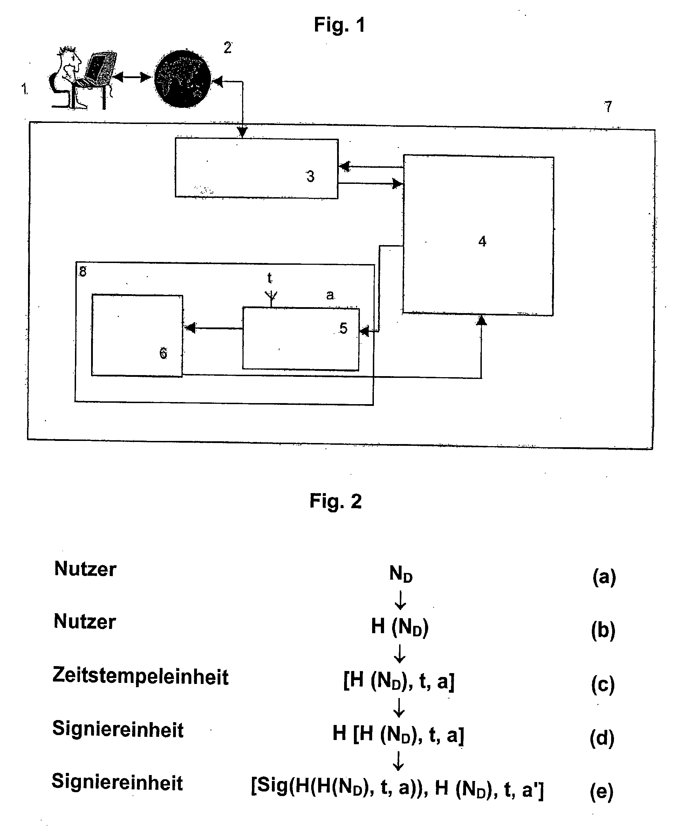

Im folgenden wird das erfindungsgemäße Verfahren anhand eines Beispiels und der beigefügten **Fig. 1** näher erläutert:

Ein Nutzer **1** möchte Nutzdaten, etwa eine Textdatei zeitsignieren lassen. Über eine geeignete Anwendungsumgebung, etwa über das Internet **2** sendet er die Nutzdaten an einen Zeitsignierdienst **7**. Um die Nutzdaten nicht unverschlüsselt über das Internet zu übersenden, wird durch eine entsprechende Software vorher eine Verschlüsselung vorgenommen, zum Beispiel, indem der HASH-Wert gebildet wird. Bei dem Zeitsignierdienst **7** gehen die Nutzdaten über einen Kommunikationsserver **3** ein. Sie werden über ein Rechnersystem **4,** das Protokollsoftware einsetzt, einer Zeitstempeleinheit **5** als Teil der Beglaubigungsvorrichtung **8** zugeführt. Dort wird eine Zeitinformation **t** angefügt. Des weiteren verfügt die Zeitstempeleinheit **5** über eine geheime Authentifizierungsinformation **a**, die der Datei ebenfalls angefügt wird. Die mit der Zeitinformation und einer Information über die Zeitstempeleinheit versehene Datei wird der Signiereinheit **6** ― ebenfalls Teil der Beglaubigungsvorrichtung **8 -** zugefügt, die aus dem Datentupel aus Nutzdaten, Zeitinformation und Authentifizierungsinformation eine signierte Datei bildet, indem erneut der HASH-Wert gebildet und signiert wird. Die so erhaltene Signatur wird als Datentupel zusammen mit Informationen über die ursprünglichen Nutzdaten und die gestempelte Zeit zurück an den Nutzer **1** übermittelt. Dem Nutzer liegen somit eine signierte Datei sowie Klartextinformationen über die dem Zeitstempeldienst übersandten Daten, die gestempelte Zeit und den genutzten Zeitstempeldienst vor. Er kann die Zeitsignatur überprüfen, indem er die dem Zeitsignierdienst übersandten Daten nochmals zusammen mit der Zeitangabe dorthin übersendet. Der Zeitsignierdienst führt dann die gleiche Verschlüsselung nochmals durch. Als Ergebnis muss dieselbe Datei erhalten werden, ist dies nicht der Fall, sind die Angaben über die Zeit und/oder über die verwendete Zeitstempeleinheit falsch.

Unter Bezugnahme auf **Fig. 2** wird erläutert, wie die vom Nutzer übermittelten Daten prinzipiell verarbeitet werden:

Zunächst liegen dem Nutzer Nutzdaten N_{D} vor (**a**). Die Anwendungssoftware des Nutzers bildet zur verschlüsselten Übertragung der Daten den HASH-Wert H (N_{D}) (**b**). Die Zeitstempeleinheit fügt dem HASH-Wert H (N_{D}) eine Angabe über die Zeit t und eine Authentifizierungsinformation a an, die geheim ist. Es entsteht so das Datentupel [H (N_{D}), t, a] (**c**).

Die Signiereinheit bildet von diesem Datentupel erneut den HASH-Wert (**d**) und signiert diesen. Diese Signatur bildet zusammen mit weiteren von nicht geheimen bzw. vom Nutzer decodierbaren Klartextangaben das Datentupel [Sig(H(H(N_{D}), t, a)), H (N_{D}), t, a'] (**e**), das dem Nutzer zurückgesendet wird. a' ist dabei eine die Zeitstempeleinheit identifizierende Angabe, entspricht aber nicht der geheimen Authentifizierungsinformation a. Als öffentliche Schlüssel ist a' mit a durch eine geheime Zuordnung unmittelbar und eindeutig verknüpft.

Soll die Zeitsignatur geprüft werden, sendet der Nutzer das Datentupel erneut an die Zeitstempelautorität. Dort kann anhand der Identifizierungsangabe a' die Zeitstempeleinheit, mit der die Zeitstempelung vorgenommen worden ist, identifiziert werden. Durch erneute Bildung des HASH-Wertes des Datentupels aus HASH-Wert den Nutzdaten, Zeit- und Authentifizierungsinformation wird ein Wert erhalten, der dem im Datentupel des Nutzers enthaltenen Wert entsprechen muss. Anderenfalls ist die Zeitsignatur manipuliert.

## Patentansprüche

1. Verfahren zur Erzeugung einer digitalen Signatur mit einer Beglaubigungsvorrichtung (8), die eine Beglaubigungseinheit (5) und eine Signiereinheit (6) umfasst, **dadurch gekennzeichnet, dass** die Beglaubigungseinheit (5) der zu signierenden Datei eine Information t und eine Authentifizierungsinformation a anfügt und die ergänzte Datei von der Signiereinheit (6) signiert wird.

2. Verfahren nach Anspruch 1, **dadurch gekennzeichnet, dass** die Beglaubigungseinheit eine Zeitstempeleinheit (5) und die Information eine Zeitinformation t ist.

3. Verfahren nach Anspruch 1 oder 2, **dadurch gekennzeichnet, dass** die Signiereinheit (6) mittels eines mobilen Datenträgers mit intelligenter Logik hinzugefügt wird.

4. Verfahren nach einem der Ansprüche 1 bis 3, **dadurch gekennzeichnet, dass** die Authentifizierungsinformation einen Authentifizierungscode a umfasst, der ein geheimer Wert ist, zu dem es einen eindeutigen öffentlichen Wert a' gibt, von dem von außen nicht auf a geschlossen werden kann.

5. Verfahren nach einem der Ansprüche 1 bis 3, **dadurch gekennzeichnet, dass** der Authentifizierungscode eine digitale Signatur ist.

6. Vorrichtung (8) zur Erzeugung einer Signatur (d) umfassend eine Beglaubigungseinheit (5) und eine Signiereinheit (6), **dadurch gekennzeichnet, dass** die Beglaubigungseinheit (5) eine Information t und eine Authentifizierungsinformation a liefert.

7. Vorrichtung (8) nach Anspruch 6, **dadurch gekennzeichnet, dass** die Beglaubigungseinheit eine Zeitstempeleinheit (5) und die Information eine Zeitinformation t sind.

8. Vorrichtung (8) nach Anspruch 6 oder 7, **dadurch gekennzeichnet, dass** die Beglaubigungseinheit (5) und die Signiereinheit (6) voneinander trennbar sind und die Beglaubigungseinheit (5) vorzugsweise im wesentlichen ortsfest und zugangsgesichert aufbewahrt wird.

9. Vorrichtung (8) nach einem der Ansprüche 6 bis 8, **dadurch gekennzeichnet, dass** die Signiereinheit (6) ein mobiler Datenträger mit intelligenter Logik ist.

10. Vorrichtung (8) nach einem der Ansprüche 6 bis 8, **dadurch gekennzeichnet, dass** die Signiereinheit (6) eine einsteckbares Bauelement mit Speicher und mit intelligenter Logik ist.
